# EUROPÄISCHE PATENTANMELDUNG

(11) **EP 0 969 638 A2**
(43) Veröffentlichungstag der Anmeldung: **05.01.2000**
(21) Anmeldenummer: 99110569.3
(22) Anmeldetag: 01.06.1999
(51) Int. Cl.: H04L 27/26, H04L 25/03

(54) **Linearisierung von multiträgerfähigen Funkempfägern**

(30) Priorität: 30.06.1998 DE 19829211
(71) Anmelder: SIEMENS AKTIENGESELLSCHAFT, 80333 München (DE)
(72) Erfinder: Helms, Jochen Dr., 81673 München (DE)

(57) **Zusammenfassung**

In einem Verfahren zur Linearisierung von multiträgerfähigen Funkempfängern mit einem Analog/Digitalwandler werden durch Nichtlinearitäten des Analog/Digitalwandlers entstehende Intermodulationskomponenten durch eine Vorverzerrung eines empfangenen Eingangsignals hinsichtlich Amplitude und Phase kompensiert. Das Verfahren wird in einer Vorverzerrungsstufe eines nachgeschalteten Analog/Digitalwandlers (2) umgesetzt, wobei die Vorverzerrungsstufe ein nichtlineares Element aufweist, mit dem ein Ausgangssignal der Vorverzerrungstufe erzeugt wird, das Signalkomponenten enthält, die die Intermodulationskomponenten des A/D-Wandlers kompensieren.

## Beschreibung

Die Erfindung betrifft ein Verfahren und eine Vorverzerrungsstufe zur Linearisierung von multiträgerfähigen Funkempfängern sowie eine entsprechende Vorrichtung.

Bei der Implementierung von Multiträger-Empfängern von Mobilfunk-Basisstationen werden verzerrungsarme Analog/Digital-Wandler mit hoher Dynamik benötigt. Diese werden vorteilhafterweise bei Zwischenfrequenzen bis in den 100 MHz-Bereich betrieben. Um die enormen Dynamikanforderungen z.B. des GSM-Standards zu erfüllen, reichen die Eigenschaften der derzeit verfügbaren Analog/Digital-Wandler noch nicht vollständig aus.

Bisher werden bei Basisstationen Schmalbandempfänger realisiert, bei denen ein Empfangszug jeweils nur eine Trägerfrequenz verarbeitet und durch schmalbandige Filterung in einer oder mehreren Zwischenfrequenzen die Dynamikanforderung an den nachfolgenden Analog/Digital-Wandler reduziert.

Der Erfindung liegt daher die Aufgabe zugrunde, ein Verfahren, eine Vorverzerrungsstufe und eine Vorrichtung zur Linearisierung von multiträgerfähigen Funkempfängern zu schaffen, womit unter Verwendung derzeitiger A/D-Wandler der parallele Aufbau schmalbandiger Empfänger vermieden wird.

Die Aufgabe wird durch die Merkmale der Ansprüche 1, 4 und 10 gelöst. Bevorzugte Ausführungsformen der Erfindung sind Gegenstand der Unteransprüche.

In dem erfindungsgemäßen Verfahren zur Linearisierung von multiträgerfähigen Funkempfängern werden durch Nichtlinearitäten des Wandlers entstehende Intermodulationskomponenten durch eine Vorverzerrung eines empfangenen Eingangssignals hinsichtlich Amplitude und Phase kompensiert. Vorzugsweise werden zu dem Eingangssignal die zu der Verzerrung des Wandlers inversen Verzerrungssignale addiert. Die inversen Verzerrungssignale können erzeugt werden, indem ein aus dem Eingangssignal abgezweigtes Teilsignal mit einer nichtlinearen Funktion verknüpft wird und die entsprechenden Verzerrungskomponenten erzeugt werden, und von diesem verzerrten Teilsignal ein weiteres aus dem Eingangssignal abgezweigtes Teilsignal zur Entfernung der Nutzsignale subtrahiert wird.

Eine erfindungsgemäße Vorverzerrungsstufe zur Erhöhung der Dynamik eines nachgeschalteten A/D-Wandlers weist ein nichtlineares Element auf, mit dem ein Ausgangssignal der Vorverzerrungstufe erzeugt wird, das Signalkomponenten enthält, die die Intermodulationskomponenten des A/D-Wandlers kompensieren.

Vorzugsweise wird das Eingangssignal in der Vorverzerrungsstufe mittels zweier Verzweiger auf drei Pfade verteilt, das Signal des zweiten Pfades in dem nichtlinearen Element Verzerrungskomponenten erzeugt, das Nutzsignal in einem Addierer durch Subtraktion des Signals des dritten Pfades von dem verzerrten Signal des zweiten Pfades entfernt wird, und das die reinen Verzerrungskomponenten enthaltene resultierende Signal in einem Addierer zu dem Signal des ersten Pfades addiert wird.

Ferner kann zur Anpassung und Wichtung der Signale sowohl der zweite als auch der dritte Signalpfad einen Filter zur Erzeugung einer komplexen Übertragungsfunktion H1(jω) und H2(jω) enthalten, und der gemeinsame Signalpfad des zweiten und dritten Pfades kann ebenfalls einen Filter zur Erzeugung einer dritten komplexen Übertragungsfunktion H3(jω) enthalten.

Laufzeitunterschiede in den einzelnen Signalpfaden können durch entsprechende Laufzeitglieder τ ausgeglichen werden.

In einer bevorzugten Ausführungsform der Vorverzerrungsstufe wird das nichtlineare Element und der durch die komplexe Übertragungsfunktion H1(jω) gebildete Filter durch einen A/D-Wandler, einem digitalen Filter mit der komplexen Übertragungsfunktion H1'(jω) und einen D/A-Wandler gebildet.

Der A/D-Wandler der Vorverzerrungsstufe ist vorzugsweise baugleich mit dem der Vorverzerrungsstufe nachfolgenden A/D-Wandler. Das digitale Filter der Vorverzerrungsstufe ist adaptiv regelbar.

Ferner besteht eine erfindungsgemäße Vorrichtung aus einer im vorangegangenen beschriebenen Vorverzerrungstufe und einem nachfolgenden A/D-Wandler.

Die Vorteile einer solchen multiträgerfähigen Anordnung sind einerseits die Vermeidung des parallelen Aufbaus von Schmalbandempfängern (Kosten, Platz), und andererseits die Möglichkeit unterschiedliche Standards (unterschiedliche Kanalbandbreiten) mit der gleichen analogen HW zu realisieren.

Bevorzugte Ausführungsformen der Erfindung werden nachfolgend anhand der Zeichnungen beschrieben.
Fig. 1 zeigt ein Blockschaltbild einer Vorverzerrungsstufe mit nachfolgendem A/D-Wandler, und
Fig. 2 zeigt ein Blockschaltbild einer bevorzugten Ausführungsform des zweiten Teilpfades der Vorverzerrungsstufe.

Die Dynamik der heute verfügbaren Analog/Digital-Wandler wird durch ihr nichtlineares Verhalten bestimmt und üblicherweise durch die Kenngröße SFDR (Spurious Free Dynamic Range) angegeben. Das SFDR gibt im Wesentlichen die Größe der am Ausgang des Wandlers vorliegenden Intermodulations- (und harmonischen) Produkte an. Die Intermodulationsprodukte entstehen durch Mischung der anliegenden Eingangs- und Taktsignale an der Wandler-Nichtlinearität und können die Empfangseigenschaften verschlechtern.

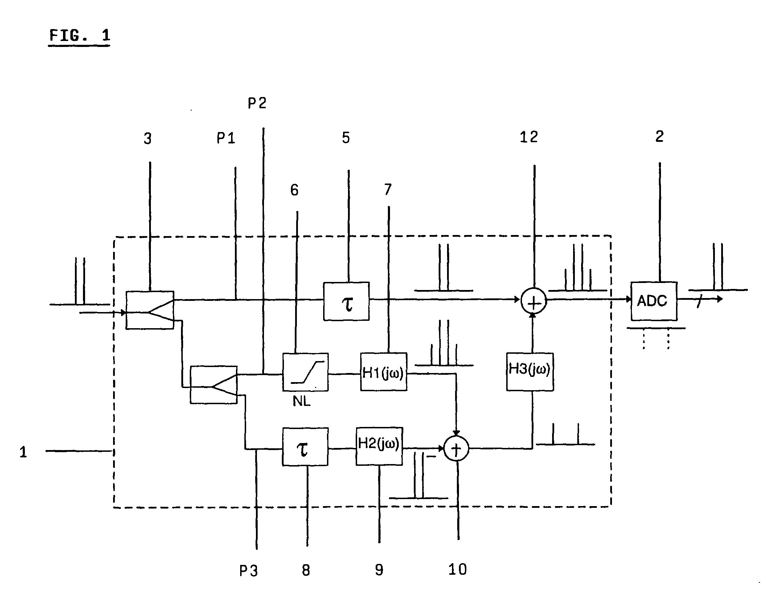

Fig. 1 zeigt die Anordnung einer Vorverzerrungsstufe 1 mit nachfolgendem A/D-Wandler 2, wobei die durch die internen Wandler-Nichtlinearitäten entstehenden Intermodulationsprodukte durch eine Vorverzerrungstufe 1 kompensiert werden.

In der Vorverzerrungsstufe 1 wird das Eingangssignal E durch zwei aufeinanderfolgende Verzweiger 3, 4 auf drei Pfade P1, P2 und P3 aufgeteilt. Das Originalsignal des ersten Pfades P1 wird in einem Verzögerungsglied 5 verzögert. Im zweiten Pfad P2 durchläuft das abgezweigte Signal ein nichtlineares Element 6 und anschließend einen Filter 7 mit der komplexen Übertragungsfunktion H1 (jω). Im dritten Pfad P3 wird das abgezweigte Signal ebenfalls durch ein Verzögerungsglied 8 und einen nachfolgenden Filter 9 mit der komplexen Übertragungsfunktion H2(jω) geleitet. In einem Addierer 10 werden die Signale des zweiten und dritten Pfades P1, P2 phasen- und amplitudenrichtig subtrahiert, d.h. es werden die Nutzsignale aus dem verzerrten Signal des zweiten Pfades entfernt, wie dies symbolhaft durch die in Fig. 1 dargestellten Spektren dargestellt ist. Das die reinen Verzerrungskomponenten enthaltende Signal durchläuft einen weiteren Filter 11 mit der komplexen Übertragungsfunktion H3(jω), wodurch die Verzerrungssignale derart gewichtet werden, daß sie nach einer Addition mit dem verzögerten Originalsignal des ersten Pfades P1 in einem Addierer 12 die wandlerintern erzeugten Verzerrungskomponenten kompensieren.

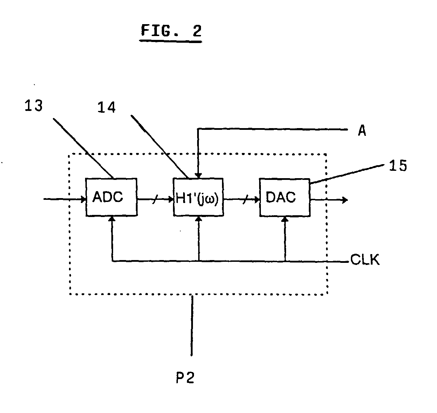

Fig. 2 zeigt eine bevorzugte Ausführungsform eines wesentlichen Teils der Vorverzerrungsstufe 1. Der in der Fig. 1 dargestellte zweite Pfad P2 bestehend aus der Nichtlinearität 6 und dem Filter 7 wird dabei ersetzt durch einen A/D-Wandler 13, gefolgt von einem Filter 14 mit der komplexen Übertragungsfunktion H1'(jω) und einem D/A-Wandler 15, die von einem gemeinsamen Takt CLK getaktet werden. Um die Verzerrungen des Empfangs-A/D-Wandlers 2 kompensieren zu können, ist der A/D-Wandler 13 des zweiten Pfades P2 baugleich mit dem A/D-Wandler 2 des Empfängers. In einem Abgleichschritt können die Filterkoeffizienten von H1'(jω) so bestimmt werden, daß die gewünschte Kompensation der Wandler-Nichtlinearitäten erfolgt. Eine weitere vorteilhafte Ausgestaltung ergibt sich, wenn die Filterkoeffizienten H1'(jω) des Filters 14 durch ein Regelsignal A adaptiv nach Maßgabe einer dem zu entzerrenden A/D-Wandler 2 nachfolgenden Signalverarbeitungseinheit (nicht dargestellt) nachgeführt werden, beispielsweise um Temperaturdrifterscheinungen ausgleichen zu können. Die Möglichkeit der Adaption ist durch den Pfeil mit der Bezeichnung A schematisch dargestellt.

## Patentansprüche

1. Verfahren zur Linearisierung von multiträgerfähigen Funkempfängern mit einem Analog/Digital-Wandler,
**dadurch gekennzeichnet**,
daß durch Nichtlinearitäten des Analog/Digital-Wandlers (2) entstehende Intermodulationskomponenten durch eine Vorverzerrung eines empfangenen Eingangsignals hinsichtlich Amplitude und Phase kompensiert werden.

2. Verfahren nach Anspruch 1, **dadurch gekennzeichnet**, daß zu dem Eingangssignals die zu der Verzerrung des Wandlers (2) inversen Verzerrungssignale addiert werden.

3. Verfahren nach Anspruch 2, **dadurch gekennzeichnet**, daß die inversen Verzerrungssignale erzeugt werden, indem ein aus dem Eingangssignal abgezweigtes Teilsignal mit einer nichtlinearen Funktion verknüpft wird, die entsprechende Verzerrungsprodukte erzeugt, und von diesem verzerrten Teilsignal ein weiteres aus dem Eingangssignal abgezweigtes unverändertes Teilsignal zur Entfernung der Nutzsignale subtrahiert wird.

4. Vorverzerrungsstufe (1) zur Linearisierung von multiträgerfähigen Funkempfängern mit einem nachfolgenden Analog/Digital-Wandler (2), **dadurch gekennzeichnet**, daß die Vorverzerrungssstufe (1) ein nichtlineares Element (6) aufweist, mit dem ein Ausgangssignal der Vorverzerrungstufe (1) erzeugt wird, das Signalkomponenten enthält, die Intermodulationskomponenten des Analog/Digital-Wandlers (2) kompensieren.

5. Vorverzerrungsstufe (1) nach Anspruch 4, **dadurch gekennzeichnet**, daß mittels zweier Verzweiger (3, 4) das Eingangssignal auf drei Pfade (P1, P2, P3) verteilt wird, das Signal des zweiten Pfades (P2) in dem nichtlinearen Element (6) Verzerrungskomponenten erzeugt, das Nutzsignal in einem Addierer (10) durch Subtraktion des Signals des dritten Pfades (P3) von dem verzerrten Signal des zweiten Pfades (P2) entfernt wird, und das die reinen Verzerrungskomponenten enthaltene resultierende Signal in einem Addierer (12) zu dem Originalsignal des ersten Pfades (P1) addiert wird.

6. Vorverzerrungsstufe nach Anspruch 5, **dadurch gekennzeichnet**, daß zur Anpassung und Wichtung der Signale sowohl der zweite als auch der dritte Signalpfad (P2, P3) einen Filter (7, 9) zur Erzeugung einer komplexen Übertragungsfunktion H1(jω) und H2(jω) enthalten, und das der gemeinsame Signalpfad des zweiten und dritten Pfades (P2, P3) ebenfalls einen Filter (11) zur Erzeugung einer dritten komplexen Übertragungsfunktion H3(jω) enthält.

7. Vorverzerrungsstufe nach einem der Ansprüche 4 - 6, **dadurch gekennzeichnet**, daß das nichtlineare Element (6) und der durch die komplexe Übertragungsfunktion H1(jω) gebildete Filter (7) durch einen A/D-Wandler (13), einen digitalen Filter (14) mit der komplexen Übertragungsfunktion H1'(jω) und einen D/A-Wandler (15) gebildet wird.

8. Vorverzerrungsstufe nach Anspruch 7, **dadurch gekennzeichnet**, daß der A/D-Wandler (13) der Vorverzerrungsstufe (1) baugleich mit dem der Vorverzerrungsstufe nachfolgenden A/D-Wandler (2) ist.

9. Vorverzerrungsstufe nach Anspruch 8, **dadurch gekennzeichnet**, daß der digitale Filter (14) der Vorverzerrungsstufe (1) adaptiv regelbar ist.

10. Vorrichtung bestehend aus einer Vorverzerrungstufe nach einem der Ansprüche 4-9 und einem nachfolgenden A/D-Wandler, die das Verfahren nach einem der Ansprüche 1-3 realisiert.
